# EUROPEAN PATENT SPECIFICATION

(11) **EP 3 971 347 B1**
(45) Date of publication and mention of the grant of the patent: **05.03.2025**
(21) Application number: 21165070.0
(22) Date of filing: 25.03.2021
(51) Int. Cl.: D21J 3/00, D21J 7/00, G06F 30/20, G06F 113/22, G06F 113/24, B33Y 80/00

(54) **ADDITION OF FEATURES TO SCREENS FOR FORMING WET PARTS WITH DETAILS**
HINZUFÜGEN VON MERKMALEN ZU SIEBEN ZUR HERSTELLUNG VON NASSTEILEN MIT DETAILS
AJOUT DE CARACTÉRISTIQUES À DES ÉCRANS POUR FORMER DES PARTIES HUMIDES AVEC DES DÉTAILS

(30) Priority: 22.09.2020 WO PCT/US2020/052058
(43) Date of publication of application: 23.03.2022
(73) Proprietor: Hewlett-Packard Development Company, L.P., Spring, TX 77389 (US)
(72) Inventor: SHIRLEY, Nathan Eric, Vancouver, Washington 98683 (US); BRIDEN, John Joseph, Palo Alto, California 94304-110 (US); DEROCHER, Michael D, Corvallis, Oregon 97330 (US); COUGHLIN, Benjamin David, Portland, Oregon 98683 (US)
(74) Representative: Haseltine Lake Kempner LLP

(56) References cited:
- EP-A1- 0 732 181
- DE-A1- 102018 003 447

## Description

### BACKGROUND

Various types of products may be fabricated from a pulp of material. Particularly, a pulp molding die that includes a main body and a mesh may be immersed in the pulp of material and the material in the pulp may form into the shape of the main body and the mesh. The main body and the mesh may have a desired shape of the product to be formed. The complexity of the shape of the product to be formed depends largely on the accuracy with which the mesh may be crafted. The main body and the mesh may include numerous pores for liquid passage, in which the pores in the mesh may be significantly smaller than the pores in the main body. During formation of the product, a vacuum force may be applied through the pulp molding die which may cause the material in the pulp to be sucked onto the mesh and form into a shape that matches the shape of the pulp molding die. The material may be removed from the mesh and may be solidified, for example through drying, to have the desired shape.

DE 10 2018 003447 A1 relates to a suction mold to produce fiber molded parts with great attention to detail. The invention also relates to a method for producing such a suction mold. According to the invention, this is achieved in that the shape of the fiber molding to be produced is formed by a perforated matrix (suction mold) produced by means of 3D printing or a process associated with rapid prototyping.

EP 0 732 181 A1 relates to a molding tool used for molding products of fibrous material manufactured efficiently by employing a lamination molding method. A molding tool having a porous structure used for molding products of fibrous material such as pulp molding is manufactured by a lamination molding method (a method for molding a three-dimensional product by subjecting a material to be laminated to prescribed treatment, the method includes a photosetting resin method). Material lacks are formed on each layer of a laminating material, the layer is laminated one above another, thereby, many suction holes are formed on the molding tool as the material lacks.

### BRIEF DESCRIPTION OF THE DRAWINGS

Features of the present disclosure are illustrated by way of example and not limited in the following figure(s), in which like numerals indicate like elements, in which:
FIG. 1 shows a block diagram of an example computer-readable medium that may have stored thereon computer-readable instructions for modifying a digital model of a feature to include a plurality of pores at determined locations in the digital model of the feature;
FIG. 2 shows a diagram, which includes an example processor that may execute the computer-readable instructions stored on the example computer-readable medium shown in FIG. 1 on the digital model of the feature to generate a modified digital model of the feature;
FIGS. 3A and 3B, respectively, depict, cross-sectional side views of an example forming tool and an example transfer tool;
FIG. 3C shows a cross-sectional side view of the example forming tool and the example transfer tool depicted in FIGS. 3A and 3B during a removal by the example transfer tool of the wet part from the example forming tool;
FIG. 3D shows an enlarged cross-sectional view of a section of the example transfer tool shown in FIG. 3B;
FIG. 4 shows a flow diagram of an example method for modifying a digital model of a feature to include a plurality of pores at determined locations in the digital model of the feature; and
FIG. 5 shows a block diagram of an example apparatus that may modify a digital model of a feature to include a plurality of pores at determined locations in the digital model of the feature.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

Disclosed herein are computer-readable media, methods, and apparatuses that may modify a digital model of a feature that is to be incorporated into a digital model of screen that is to be used to generate a wet part, such as a molded fiber article. The digital model of the feature may be modified to include a plurality of pores at determined locations in the digital model of the feature. The feature may correspond to an embossed detail, such as an embossed graphical element, an embossed logo, an embossed text, a predefined embossed texture, a predefined embossed pattern, a bas relief, a combination thereof, or the like. A processor may process the digital model of a screen separately from the digital model of the feature. That is, for instance, the locations of pores in the digital model of the feature may be determined in the digital model of the screen prior to the addition of the digital model of the feature to the digital model of the screen. The pores may also be added at the determined locations in the digital model of the screen prior to addition of the digital model of the feature to the digital model of the screen.

As discussed herein, the screen may be implemented in a formation of a wet part from a slurry of a liquid and material elements. In addition, the screen may be a forming screen or a transfer screen.

Through implementation of the features of the present disclosure, a processor may determine the locations of the pores in the digital model of the screen prior to the addition of the digital model of the feature to the digital model of the screen. The pores in the digital model of the screen may also be added at the determined locations in the digital model of the screen prior to addition of the digital model of the feature to the digital model of the screen. In one regard, this may make the determination and placement of the pores in the digital model of the screen relatively simpler and less computationally intensive because the digital model of the screen may include relatively flat surfaces whereas the digital model of the feature may include raised, curved, textured, patterned, and/or the like surfaces. That is, the processor may place the pores at normals to the surface of the digital model of the screen, e.g., perpendicularly to the locations at the surface at which the pores are to be placed, which may be simpler and may result in more accurately placed pores in the screen. By placing the pores perpendicularly to the surface at which the pores are placed, the pores may be placed without causing, for instance, some of the pores to intersect each other, the pores having noisy orientations, and the like. Intersecting pores may be undesirable because they may result in violations of minimum pore distance constraints, which may lead to the formation of weak points in the screen.

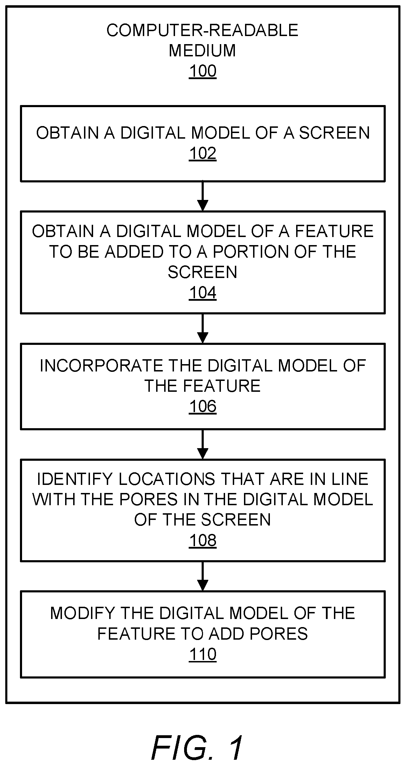

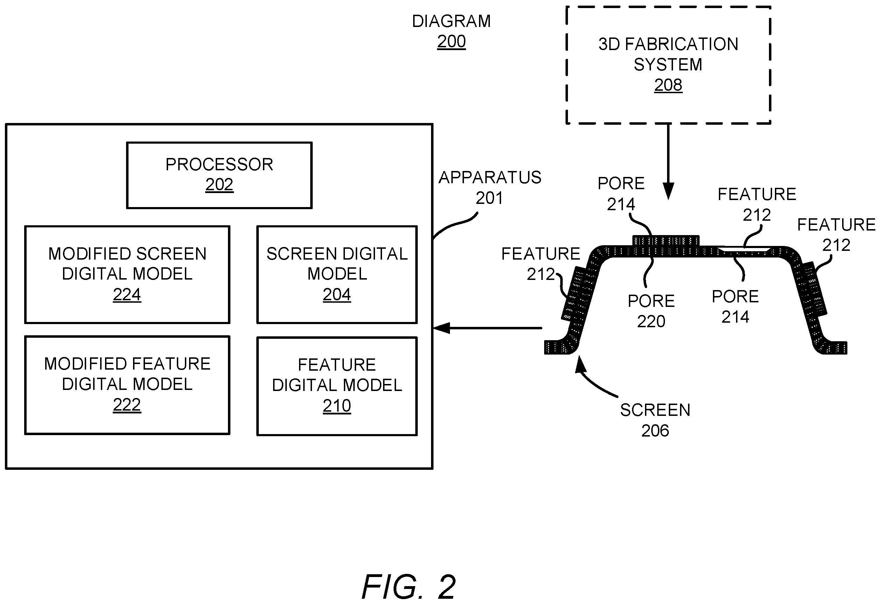

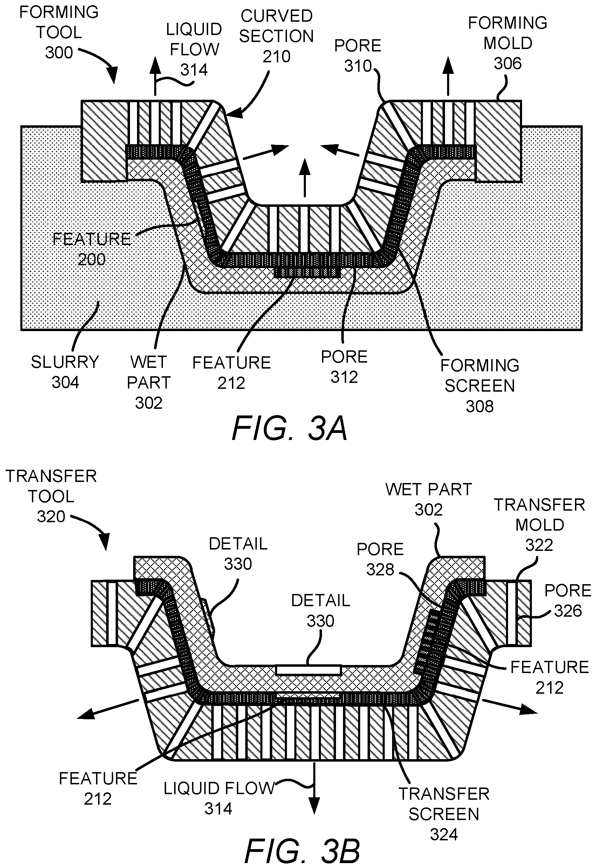

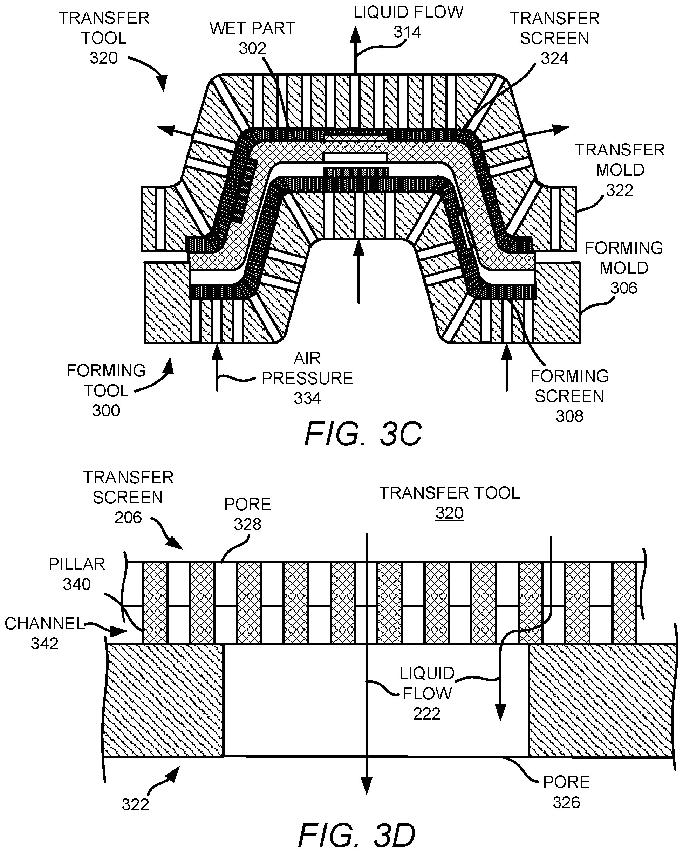

Reference is first made to FIGS. 1, 2, and 3A-3C. FIG. 1 shows a block diagram of an example computer-readable medium 100 that may have stored thereon computer-readable instructions for modifying a digital model 210 of a feature 212 to include a plurality of pores 214 at determined locations in the digital model 210 of the feature 212. FIG. 2 shows a diagram 200, which includes an example processor 202 that may execute the computer-readable instructions stored on the example computer-readable medium 100 on the digital model 210 of the feature 212 to generate a modified digital model 222 of the feature 212. FIGS. 3A and 3B, respectively, depict, cross-sectional side views of an example forming tool 300 and an example transfer tool 320 and FIG. 3C shows a cross-sectional side view of the example forming tool 300 and the example transfer tool 320 during a removal by the transfer tool 320 of the wet part 302 from the forming tool 300. It should be understood that the example computer-readable medium 100 depicted in FIG. 1, the example processor 202 depicted in FIG. 2, and/or the example forming tool 300 and the example transfer tool 320 respectively depicted in FIGS. 3A-3C may include additional attributes and that some of the attributes described herein may be removed and/or modified without departing from the scopes of the example computer-readable medium 100, the example processor 202, and/or the example forming tool 300 and the example transfer tool 320.

The computer-readable medium 100 may have stored thereon computer-readable instructions 102-110 that a processor, such as the processor 202 depicted in FIG. 2, may execute. The computer-readable medium 100 may be an electronic, magnetic, optical, or other physical storage device that contains or stores executable instructions. The computer-readable medium 100 may be, for example, Random Access memory (RAM), an Electrically Erasable Programmable Read-Only Memory (EEPROM), a storage device, an optical disc, and the like. Generally speaking, the computer-readable medium 100 may be a non-transitory computer-readable medium, in which the term "non-transitory" does not encompass transitory propagating signals.

The processor 202 may fetch, decode, and execute the instructions 102 to obtain a digital model 204 of a screen 206 to be fabricated by a three-dimensional (3D) fabrication system 208. The digital model 204 of the screen 206 may include either a plurality of pores 220 or the digital model 204 of the screen 206 is to be processed to algorithmically add a plurality of pores 220 to the digital model 204. As discussed herein, the screen 206 is to be implemented in a formation of a wet part 302 from a slurry 304 of a liquid and material elements. In some examples, the screen 206 may be a forming screen 308 of a forming tool 300 as shown in FIG. 3A. In other examples, the screen 206 may be a transfer screen 324 of a transfer tool 320. The forming tool 300 and the transfer tool 320 are described in greater detail herein.

The processor 202 may fetch, decode, and execute the instructions 104 to obtain a digital model 210 of a feature 212 to be added to a portion of the screen 206. As shown in FIG. 2, the feature 212 may be a structure that may be added to a surface of the screen 206 or may include a shape that may be removed from the screen 206 to impart a detail 330 corresponding to the feature 212 onto the wet part 302 during formation of the wet part 302. In either case, the feature 212 may be an embossed graphical element, an embossed logo, text, a predefined embossed texture, a predefined embossed pattern, a bas relief, a combination thereof, or the like. The feature 212 may be embossed as a positive, a negative, or a combination of both, relief.

Each of the digital models 204 and 210 may be a 3D computer model of a respective one of the screen 206 and the feature 212, such as a computer aided design (CAD) file, or other digital representation of these components. In addition, the processor 202 may obtain (or equivalently, access, receive, or the like) the digital models 204, 210 from a data store (not shown) or some other suitable source. In some examples, the digital models 204, 210 may be generated using a CAD program or another suitable design program.

According to examples, and as discussed in greater detail herein, the forming tool 300 and the transfer tool 320 may be employed in the fabrication of a wet part 302 from a slurry 304 of a liquid and material elements. In some examples, the liquid may be water or another type of suitable liquid in which pulp material, e.g., paper, wood, fiber crops, bamboo, or the like, may be mixed into the slurry 304. The material elements may be, for instance, fibers of the pulp material. The wet part 302 may thus be formed of molded fiber.

The processor 202 may fetch, decode, and execute the instructions 106 to incorporate the digital model 210 of the feature 212 with the digital model 204 of the screen 206. In some examples, the processor 202 may incorporate the digital model 210 of the feature 212 by adding the digital model 210 of the feature 212 onto a surface of the digital model 204 of the screen 206 to cause the digital model 210 of the feature 212 to extend above the surface of the digital model 204 of the screen 206, in which the feature 212 is to be added to the screen 206 when the screen 206 and the feature 212 are fabricated. In other examples, the processor 202 may incorporate the digital model 210 of the feature 212 by adding the digital model 210 of the feature 212 below a surface of the digital model 204 of the screen 206 to cause the digital model 210 of the feature 212 to extend below the surface of the digital model 204 of the screen 206, in which the feature 212 is to be removed from the screen 206 when the screen 206 is fabricated. Examples of both types of features 212 are depicted in FIG. 2. The features 212 may be sections (e.g., protrusions) that may be raised above a nominal surface of the screen digital model 204, sections (e.g., indentations) that may be below the nominal surface of the screen digital model 204, and/or a combination thereof.

The processor 202 may fetch, decode, and execute the instructions 108 to identify locations in the digital model 210 of the feature 212 that are in line with pores 220 in the digital model 204 of the screen 206. That is, the processor 202 may identify the locations of the pores 220 in the digital model 204 of the screen 206 and the locations in the digital model 210 of the feature 212 at which the pores 220 intersect with the feature 212. The intersecting locations in the digital model 210 of the feature 212 may be equivalent to the locations that are in line with the pores 220 in the digital model 204 of the screen 206.

According to examples, the pores 220 may have previously been positioned in the digital model 204 of the screen 206. In other examples, the processor 202 may process the digital model 204 of the screen 206 to algorithmically add the plurality of pores 220 to the digital model 204 of the screen 206. For instance, the processor 202 may employ packing operations to determine the locations at which the pores 220 are to be placed in the screen 206. By way of example, the processor 202 may implement a packing algorithm that may cause a maximum number of pores 220 to be added to the screen 206 while causing the screen 324 to have a certain level of mechanical strength, e.g., to prevent weak points. In this example, the algorithm may be a sphere or ellipsoid packing algorithm or other suitable algorithm for determining placements of the pores 220.

In examples in which the screen 206 is a transfer screen 324, the processor 202 may determine the locations at which the pores 328 of the transfer screen 324 are to be positioned in the transfer screen 324 to allow liquid to be suctioned from the wet part 302 when the transfer screen 324 is mounted to the transfer mold 322 and a vacuum pressure is applied to the transfer mold 322. The processor 202 may determine the pore 328 locations that may cause, for instance, substantially even application of pressure across the transfer screen 324 through testing of previously fabricated transfer screens 206 and transfer molds 322, through modeling of transfer screens 324 having various properties, and/or the like.

In examples in which the screen 206 is a forming screen 308, the processor 202 may determine the locations at which the pores 310 of the forming screen 308 are to be positioned in the forming screen 308 to allow liquid to be suctioned from the slurry 304 to form the wet part 302 on the forming screen 308 when the forming screen 308 is mounted to the forming mold 306 and a vacuum pressure is applied to the forming mold 306. The processor 202 may determine the pore 310 locations that may cause, for instance, substantially even application of pressure across the forming screen 308 through testing of previously fabricated forming screens 308 and forming molds 306, through modeling of forming screens 308 having various properties, and/or the like.

The processor 202 may fetch, decode, and execute the instructions 110 to modify the digital model 210 of the feature 212 to add pores 214 at the identified locations in the digital model 210 of the feature 212 to extend the pores 220 in the digital model 204 of the screen 206 through the digital model 210 of the feature 212. As a result, vacuum pressure may be applied through the pores 220 in the screen 206 and the pores 214 in the feature 212. In instances in which the feature 212 is to add an indentation into the screen 206, the processor 202 may modify the digital model 210 of the feature 212 by causing the pores 214 to extend into the feature 212.

In some examples, the processor may generate a modified screen digital model 224 that may include the modified feature digital model 222. In addition, the processor 202 may send the modified screen digital model 224 to the 3D fabrication system 208, in which the 3D fabrication system 208 is to fabricate the screen 206 with the feature 212 and the plurality of pores 214, 220 at the determined placements. Particularly, the processor 202 may send the modified screen digital model 224, which may include the modified feature digital model 222, to a controller or processor of the 3D fabrication system 208, which may process or otherwise use the modified screen digital model 224 to fabricate the screen 206. In other examples, the processor 202 may be the controller or processor of the 3D fabrication system 208.

The 3D fabrication system 208 may be any suitable type of additive manufacturing system. Examples of suitable additive manufacturing systems may include systems that may employ curable binder jetting onto build materials (e.g., thermally or UV curable binders), ink jetting onto build materials, selective laser sintering, stereolithography, fused deposition modeling, etc. In a particular example, the 3D fabrication system 208 may form the transfer screen 324 by binding and/or fusing build material particles together. In any of these examples, the build material particles may be any suitable type of material that may be employed in 3D fabrication processes, such as, a metal, a plastic, a nylon, a ceramic, an alloy, and/or the like. Generally speaking, higher functionality/performance transfer screens 324 may be those with the smallest pore size to block fibers of smaller sizes, and hence some 3D fabrication system technologies may be more suited for generating the transfer screens 324 than others.

As discussed herein, the processor 202 may process the digital model 204 of the screen 206 separately from the digital model 210 of the feature 212. That is, for instance, the locations of the pores 220 may be determined in the digital model 204 of the screen 206 prior to the addition of the digital model 210 of the feature 212 to the digital model 204 of the screen 206. The pores 220 may also be added at the determined locations in the digital model 204 of the screen 206 prior to addition of the digital model 210 of the feature 212 to the digital model 204 of the screen 206. In one regard, this may make the determination and placement of the pores 220 relatively simpler and less computationally intensive because the digital model 204 of the screen 206 may include relatively flat surfaces whereas the digital model 210 of the feature 212 may include raised, curved, textured, patterned, and/or the like surfaces. That is, the processor 202 may place the pores 220 at normals to the surface of the digital model 204 of the screen 206, which may be simpler and may result in more accurately placed pores 220 in the screen 206, e.g., perpendicularly to the locations at the surface at which the pores are to be placed. By placing the pores 220 perpendicularly to the surface at which the pores 220 are placed, the pores 220 may be placed without causing, for instance, some of the pores 220 to intersect each other. Intersecting pores 220 may be undesirable because they may result in violations of minimum pore distance constraints.

Additionally, the processor 202 may determine the locations of the pores 214 in the digital model 210 of the feature 212 after the pores 220 have been added to the digital model 204 of the screen 206. In one regard, by determining the locations of the pores 214 separately from the determination of the locations of the pores 220 in the digital model 204 of the screen 206, the processor 202 may accurately determine the locations of the pores 214 such that air and/or liquid may freely flow through the pores 214, 220.

In particular examples, the digital model 204 of the screen 206 may include a substantially horizontally extending surface and a substantially vertically extending surface. In these examples, the processor 202 may incorporate the digital model 210 of the feature 212 to the substantially horizontally extending surface, the substantially vertically extending surface, or both the substantially horizontally extending surface and the substantially vertically extending surface.

In some examples, the processor 202 may be part of an apparatus 201, which may be a computing system such as a server, a laptop computer, a tablet computer, a desktop computer, or the like. The processor 202 may be a semiconductor-based microprocessor, a central processing unit (CPU), an application specific integrated circuit (ASIC), a field-programmable gate array (FPGA), and/or other suitable hardware device. The apparatus 201 may also include a memory that may have stored thereon computer-readable instructions (which may also be termed computer-readable instructions) that the processor 202 may execute. The memory may be an electronic, magnetic, optical, or other physical storage device that contains or stores executable instructions. The memory may be, for example, Random Access memory (RAM), an Electrically Erasable Programmable Read-Only Memory (EEPROM), a storage device, an optical disc, and the like. The memory, which may also be referred to as a computer-readable storage medium, may be a non-transitory computer-readable storage medium, where the term "non-transitory" does not encompass transitory propagating signals.

Reference is now made to FIGS. 3A-3C. FIG. 3A shows a cross-sectional side view of a forming tool 300, in which a portion of the forming tool 300 has been depicted as being placed within a volume of the slurry 304. FIG. 3B shows a cross-sectional side view of the transfer tool 320 that may remove the wet part 302 from the forming screen 308. FIG. 3C shows a cross-sectional side view of the forming tool 300 and the transfer tool 320 during a removal by the transfer tool 320 of the wet part 302 from the forming tool 300. The forming tool 300 and the transfer tool 320 may collectively form a pulp molding tool set.

As shown in FIG. 3A, the forming tool 300 may include a forming mold 306 and a forming screen 308, in which the forming screen 308 may overlay the forming mold 306. As shown in FIG. 3B, the transfer tool 320 may include a transfer mold 322 and a transfer screen 324. As discussed herein, either or both of the forming screen 308 and the transfer screen 324 may be equivalent to the screen 206 depicted in FIG. 2. In some examples, the forming screen 308 and the transfer screen 324 may be fabricated by a 3D fabrication system 208. The forming mold 306 and the transfer screen 324 may also be fabricated by the 3D fabrication system 208. In some examples, however, the transfer tool 320 may not include the transfer screen 324. The fabricated forming screen 308 and the fabricated transfer screen may be used to form we parts 302, e.g., molded fiber articles.

In some examples, the forming mold 306 and/or the transfer mold 322 may be removably mounted onto respective supporting structures (not shown) such that, for instance, the forming mold 306 may be moved independently from the transfer mold 322. Moreover, the forming mold 306 and the forming screen 308 may be fabricated to have shapes to which the wet part 302 may be molded when formed on the forming screen 308. Likewise, the transfer mold 322 and the transfer screen 324 may be fabricated to have shapes that may engage multiple surfaces of the wet part 302 formed on the forming screen 308. The transfer screen 324 may have a shape that is complementary to the shape of the forming screen 308.

As shown, the forming mold 306 may be formed to have a relatively larger thickness than the forming screen 308 and the transfer mold 322 may be formed to have a relatively larger thickness than the transfer screen 324. In some examples, the transfer screen 324 and the forming screen 308 may have the same or similar thicknesses and/or the transfer mold 322 and the forming mold 306 may have the same or similar thicknesses. The larger thicknesses of the forming mold 306 and the transfer mold 322 may cause the forming mold 306 and the transfer mold 322 to be substantially more rigid than the forming screen 308 and the transfer screen 324. The forming mold 306 may provide structural support for the forming screen 308 and the transfer mold 322 may provide structural support for the transfer screen 324.

In some examples, different versions of the forming screen 308 may be mounted to the forming mold 306 to form wet parts 302 having different details. For instance, a first forming screen 308 may include a first feature 212 that may be imprinted onto the wet part 302 as a first detail 330 and a second forming screen 308 may include a second feature 212 that may be imprinted onto the wet part 302 as a second detail 330, in which the first feature 212 and the second feature 212 may correspond to embossed logos, predefined embossed textures, embossed text, embossed designs, and/or the like. In this regard, different embossed details 330 may be added to the wet part 302 through the use of different forming screens 308, while using the same forming mold 306, which may simplify the formation of wet parts 302 having various details 330.

Likewise, different versions of the transfer screen 324 may be mounted to the transfer mold 322 to imprint different details 330 onto a surface (or multiple surfaces) of the wet parts 302. For instance, a first transfer screen 324 may include a first feature 212 that may be imprinted onto the wet part 302 as a first detail 330 and a second forming screen 308 may include a second feature 212 that may be imprinted onto the wet part 302 as a second detail 330. The first detail 330 and the second detail 330 may also include embossed logos, predefined embossed textures, predefined embossed patterns, embossed text, embossed designs, and/or the like. In this regard, different details may be added to the wet part 302 through the use of different transfer screens 324, while using the same transfer mold 322, which may also simplify the formation of wet parts 302 having various details 330. In some examples, the features 212 on the transfer screen 324 may be complementary versions of features 212 on the forming screen 308 such that, for instance, a common detail 330 may be formed on both opposite surfaces on the wet part 302.

The forming mold 306 and/or the forming screen 308 may include an attachment mechanism (or attachment device) for the forming screen 308 to be mounted to the forming mold 306. Likewise, the transfer mold 322 and/or the transfer screen 324 may include an attachment mechanism (or attachment device) for the transfer screen 324 to be mounted to the transfer mold 322. In either case, the mechanism may include mechanical fasteners, detents, and/or the like to enable the forming screen 308 to be removably mounted onto the forming mold 306 and/or the transfer screen 324 to be removably mounted onto the transfer mold 322. The mechanism that mounts the forming screen 308 to the forming mold 306 and/or that mounts the transfer screen 324 to the transfer mold 322 may be a quick release mechanism to enable the forming screen 308 and/or the transfer screen 324 to easily be released from the respective forming mold 306 and transfer mold 322. This may facilitate replacement of the forming screen 308 and/or the transfer screen 324 for maintenance purposes and/or for screens 308, 206 having different features to be employed in the formation of wet parts 302.

As also shown in FIGS. 3A-3C, each of the forming mold 306, the forming screen 308, the transfer mold 322, and the transfer screen 324 may include respective pores 310, 312, 326, 328 that may extend completely through respective top and bottom surfaces of the forming mold 306, the forming screen 308, the transfer mold 322, and the transfer screen 324. The pores 312, 328 respectively in the forming screen 308 and the transfer screen may be significantly smaller than the pores 310, 326 respectively in the forming mold 306 and the transfer mold 322. In addition, a plurality of structural features, such as pillars 340 (shown in FIG. 3D) may be provided between the surfaces of the forming mold 306 and the forming screen 308 and between the transfer mold 322 and the transfer screen 324 that are respectively adjacent and face each other to enable liquid to flow laterally between the forming mold 306 and the forming screen 308 and between the transfer mold 322 and the transfer screen 324. As some of the pores 312 in the forming screen 308 may not directly align with the pores 310 in the forming mold 306 and some of the pores 328 in the transfer screen 324 does not directly align with the pores 326 in the transfer mold 322, the channels 342 formed by the structural features may enable liquid to flow through those pores 312, 328 in addition to the pores 312, 328 that are directly aligned with respective the pores 310, 326.

Although not shown, the forming tool 300 may be in communication with a plenum to which a vacuum source may be connected such that the vacuum source may apply a vacuum pressure through the pores 310, 312 in the forming mold 306 and the forming screen 308. When the vacuum pressure is applied through the pores 310, 312, some of the liquid in the slurry 304 may be suctioned through the pores 310, 312 and may flow into the plenum as denoted by the arrows 314. As the liquid flows through the pores 310, 312, the forming screen 308 may prevent the material elements in the slurry 304 from flowing through the pores 312. That is, the pores 312 may have sufficiently small dimensions, e.g., diameters or widths, that may enable the liquid to flow through the pores 312 while blocking the material elements from flowing through the pores 312. In one regard, the diameters or widths of the pores 312 may be sized based on sizes of the material elements, e.g., fibers, in the slurry 304. By way of particular example, the pores 312 may have diameters of around 0.6 mm. However, in some instances, the pores 312 may have irregular shapes as may occur during 3D fabrication processes.

Over a period of time, which may be a relatively short period of time, e.g., about a few seconds, less than about a minute, less than about five minutes, or the like, the material elements may build up on the forming screen 308. Particularly, the material elements in the slurry 304 may be accumulated and compressed onto the forming screen 308 into the wet part 302. The wet part 302 may take the shape of the forming screen 308. In addition, the thickness and density of the wet part 302 may be affected by the types and/or sizes of the material elements in the slurry 304, the length of time that the vacuum pressure is applied while the forming mold 306 and the forming screen 308 are placed within the volume of the slurry 304, etc. That is, for instance, the longer that the vacuum pressure is applied while the forming mold 306 and the forming screen 308 are partially immersed in the slurry 304, the wet part 302 may be formed to have a greater thickness.

After a predefined period of time, e.g., after the wet part 302 having desired properties has been formed on the forming screen 308, the forming mold 306 and the forming screen 308 may be removed from the volume of slurry 304. For instance, the forming mold 306 may be mounted to a movable mechanism that may move away from the volume of slurry 304. In some examples, the movable mechanism may rotate with respect to the volume such that rotation of the movable mechanism may cause the forming mold 306 and the forming screen 308 to be removed from the volume of slurry 304. In other examples, the movable mechanism may be moved laterally with respect to the volume of slurry 304. As the forming mold 306 and the forming screen 308 are removed from the volume, some of the excess slurry 304 may come off of the wet part 302. However, the wet part 302 may have a relatively high concentration of liquid.

Following the formation of the wet part 302 on the forming screen 308 and movement of the forming screen 308 and the wet part 302 out of the volume of slurry 304, the transfer tool 320 may be moved such that the transfer screen 324 may contact the wet part 302 on the forming screen 308. That is, for instance, the transfer mold 322 may be attached to a movable mechanism (not shown), in which the movable mechanism may cause the transfer mold 306 and the transfer screen 324 to move toward the forming screen 308. In some examples, the transfer tool 320 may be moved to cause the transfer screen 324 to be in contact with the wet part 302 prior to the wet part 302 being de-watered while on the forming screen 308, e.g., within a few seconds of the wet part 302 being removed from the volume of slurry 304. In one regard, the transfer tool 320 may engage the wet part 302 relatively quickly after formation of the wet part 302, which may enable the transfer tool 320 to remove the wet part 302 relatively quickly and the forming tool 300 to be inserted into the volume of slurry 304 to form a next wet part 302.

In addition, the transfer tool 320 may be in communication with a plenum to which a vacuum source may connected such that the vacuum source may apply a vacuum pressure through the pores 326, 328 while the wet part 302 is in contact with the transfer screen 324. The vacuum source may be the same or a different vacuum source to which the forming tool 300 may be in communication. The vacuum pressure applied through the forming tool 300 may be terminated or reversed (e.g., applied in the opposite direction) while the vacuum pressure is applied through the transfer tool 320.

FIG. 3C shows a state in which the transfer tool 320 may be in the process of removing the wet part 302 from the forming screen 308. Particularly, in that figure, the transfer screen 324 has been moved into contact with the wet part 302 and a vacuum pressure has been applied onto the wet part 302 through the transfer screen 324. In addition, while the vacuum pressure is applied onto the wet part 302, the transfer tool 320 may be moved away from the forming tool 300 (or the forming tool 300 may be moved away from the transfer tool 320) to pull the wet part 302 off of the forming screen 308. To further facilitate removal of the wet part 302 from the forming screen 308, air pressure may be applied through the forming tool 300 as denoted by the arrows 334. As such, the wet part 302 may be biased toward the transfer tool 320 as opposed to being biased toward the forming tool 300. While the wet part 302 is biased toward the transfer tool 320, the transfer tool 320 may be moved away from the forming tool 300 such that the transfer tool 320 may remove the wet part 302 from the forming tool 300. In FIG. 3C, the forming tool 300 and the transfer tool 320 have been rotated 180° from their respective positions in FIGS. 3A and 3B. It should, however, be understood that the transfer mold 322 may remove the wet part 302 from the forming screen 308 while the forming tool 300 and the transfer tool 320 are in other orientations.

As shown in FIG. 3B, the transfer screen 324 may include pores 328 across multiple surfaces of the transfer screen 324. In some examples, the pores 328 may be positioned deterministically in the transfer screen 324 to cause pressure to be applied substantially evenly across the transfer screen 324 when the vacuum pressure is applied. As a result, pressure may be applied substantially evenly across the surface of the wet part 302 that is in contact with the transfer screen 324. This may prevent the application of increased pressure at a particular location on the surface of the wet part 302, which may prevent the wet part 302 from being damaged by the application of the pressure onto the wet part 302 through the transfer screen 324. Additionally, this may enable the transfer tool 320 to remove wet parts 302 having a vertically or substantially vertically extending (e.g., zero draft) surface (or surfaces) from the forming screen 308 as the pressure may be sufficient to overcome frictional and other forces applied by the forming screen 324 onto the wet part 302.

When the wet part 302 is in contact with the transfer screen 324, the wet part 302 may include some of the liquid from the slurry 304. In addition, when the vacuum pressure is applied through the pores 326, 328, some of the liquid in the wet part 302 may be suctioned through the pores 326, 328 and may flow into the plenum as denoted by the arrows 314. As the liquid flows through the pores 326, 328, the transfer screen 324 may prevent the material elements in the wet part 302 from flowing through the pores 326. That is, the pores 326 may have sufficiently small dimensions, e.g., diameters or widths, that may enable the liquid to flow through the pores 326 while blocking the material elements from flowing through the pores 326. In one regard, the diameters or widths of the pores 312 may be sized based on sizes of the material elements, e.g., fibers, in the slurry 304. By way of particular example, the pores 326 may have diameters of around 0.6 mm or smaller. However, in some instances, the pores 328 may have irregular shapes as may occur during 3D fabrication processes.

In one regard, the application of the vacuum pressure through the pores 326, 328 may de-water the wet part 302 by removing some of the liquid from the wet part 302. As a result, when the wet part 302 undergoes drying, for instance, in an oven, the amount of energy and/or the amount of time to dry the wet part 302 may significantly be reduced.

In another regard, the application of vacuum pressure through the pores 326, 328 may cause the material elements at the surface of the wet part 302 that is contact with the transfer screen 324 to have a greater density than the material elements closer to the center of the wet part 302. As a result, the wet part 302 may resist warpage during drying of the wet part 302, for instance, in an oven, due to a greater level of symmetrical shrinkage afforded by the denser surface matching the similarly dense surface on the forming screen 308 side of the wet part 302. Additionally, the surface may be relatively smoother than when the wet part 302 is allowed to de-water without the application of pressure onto the surface of the wet part 302.

As the liquid flows through the pores 326, 328, the material elements in the wet part 302 may be prevented from flowing through the pores 328 in the transfer screen 324. That is, the pores 328 may have sufficiently small dimensions, e.g., diameters or widths, that may enable the liquid to flow through the pores 328 while blocking the material elements from flowing through the pores 328. In one regard, the diameters or widths of the pores 328 may be sized based on sizes of the material elements, e.g., fibers, in the slurry 304.

According to examples, the pores 310, 312 may respectively be positioned in the forming mold 306 and the forming screen 308 and may have properties, e.g., sizes and/or shapes, such that the wet part 302 may be formed with predefined characteristics. For instance, the pores 310, 312 may be positioned and may have certain properties to cause the wet part 302 to be formed to have an intended thickness (or thicknesses) throughout the wet part 302. By way of particular example, the pores 310, 312 may be positioned and may have certain properties to cause thicknesses of the wet part 302 to be consistent throughout the wet part 302. As another example, the pores 310, 312 may be positioned and may have certain properties to cause the wet part 302 to be formed without an area having a thickness that is below a certain threshold thickness, e.g., a thickness at which a weak point may be formed in the wet part 302.

In some examples, the positions and/or properties of the pores 310, 312, 326, and/or 328 may be determined through implementation of an algorithm that the processor 202 may execute. For instance, the algorithm may be a packing algorithm that may cause a maximum number of pores 310, 312, 326, and/or 328 to respectively be added while causing the forming mold 306, the forming screen 308, the transfer mold 322, and/or the transfer screen 324 to have certain levels of mechanical strength, e.g., to prevent weak points. In this example, the algorithm may be a sphere or ellipsoid packing algorithm or other suitable algorithm for determining placements of the pores 310, 312, 326, and/or 328.

As another example, the algorithm may be a packing algorithm that may position similarly sized pores 310 evenly across the forming mold 306 and/or similarly sized pores 312 evenly across the forming screen 308. In this example, the processor 202 may execute the algorithm to place an array of pores 310 across a flattened version of the forming mold 306 or an array of pores 312 across a flattened version of the forming screen 308. Similarly, the packing algorithm may position similarly sized pores 326 across the transfer mold 322 and/or similarly sized pores 328 across the transfer screen 324. In this example, the processor 202 may execute the algorithm to place an array of pores 326 across a flattened version of the transfer mold 322 or an array of pores 328 across a flattened version of the forming screen 308.

By placing the pores 310, 312, 326, and/or 328 across the flattened versions, the processing resources and/or time consumed to arrange the pores 310, 312, 326, and/or 328 may be reduced as compared with the processing resources and/or time consumed to implement other types of packing algorithms as the other types of packing algorithms may be more computationally intensive than the algorithm of this example. In any regard, following placement of the pores 310, 312, 326, and/or 328, the processor 202 may cause the digital models 204, 210-214 of the forming mold 306, the forming screen 308, the transfer mold 322, and/or the transfer screen 324 to include a curved section or multiple curved sections.

According to examples, the pores 328 in the transfer screen 324 may have properties, e.g., sizes and/or shapes, such that pressure may be applied onto the wet part 302 as described herein when a vacuum pressure is applied through the pores 328. For instance, the pores 328 may be positioned and may have certain properties to cause pressure to be evenly applied across multiple surfaces of the wet part 302. As other examples, the pores 328 may be positioned and may have certain properties to enable sufficient pressure to be applied across the multiple surfaces of the wet part 302 to suction liquid from the wet part 302 without, for instance, damaging the wet part 302. In one regard, through application of substantially even pressure across multiple surfaces of the wet part 302, the transfer screen 324 may be employed to remove a wet part 302 having a substantially vertical surface. In this regard, at least one of the multiple surfaces of the transfer screen 324 may extend substantially vertically (e.g., have a substantially zero draft) when removing the wet part 302 from the forming screen 308.

The processor 202 may determine the locations at which the pores 328 are to be positioned in the transfer screen 324 to allow liquid to be suctioned from the wet part 302 when the transfer screen 324 is mounted to the transfer mold 322 and a vacuum pressure is applied to the transfer mold 322. The processor 202 may determine the pore 328 locations that may cause, for instance, the even application across the transfer screen 324 through testing of previously fabricated transfer screens 206 and transfer molds 322, through modeling of transfer screens 324 having various properties, and/or the like. In addition, the processor 202 may employ packing operations to determine the locations at which the pores 328 are to be placed in the transfer screen 324. By way of example, the processor 202 may implement a packing algorithm that may cause a maximum number of pores 328 to be added to the transfer screen 324 while causing the transfer screen 324 to have a certain level of mechanical strength, e.g., to prevent weak points. In this example, the algorithm may be a sphere or ellipsoid packing algorithm or other suitable algorithm for determining placements of the pores 328.

According to examples, the processor 202 may determine the locations of the pores 328 based on the properties (e.g., shapes and/or sizes) and/or locations of pores 326 in the forming mold 322. In these examples, the processor 202 may obtain a digital model 210 of the transfer mold 322, in which the transfer mold digital model 322 may include a plurality of pores 326 or a plurality of pores 326 are to be added algorithmically to the transfer mold digital model 210. In addition, the processor 202 may determine the placements of the plurality of pores 328 in the transfer screen 324 with respect to liquid flow characteristics predicted to occur through the plurality of pores 326 in the transfer mold 322. That is, based on how liquid is predicted or modeled to flow through the pores 326 in the transfer mold 322, the pores 328 may be deterministically placed to cause the flow through the pores 328 to be substantially even across the transfer screen 324. This may include, for instance, placing some pores 328 at higher density levels at some locations of the transfer screen 324 while some locations of the transfer screen 324 may include no pores 328.

In addition, and as shown in FIG. 3D, a plurality of structural features, such as pillars 340, may be provided between the surfaces of the transfer mold 322 and the transfer screen 324 that are respectively adjacent and face each other to enable liquid to flow laterally between the transfer mold 322 and the transfer screen 324. As some of the pores 328 in the transfer screen 324 do not directly align with the pores 326 in the transfer mold 322, the channels 342 formed by the structural features 340 may enable liquid to flow through those pores 328 in addition to the pores 328 that are directly aligned with respective pores 326 in the transfer mold 322. The channels 342 may thus enable pressure to be applied through a larger number of the pores 328 and thus cause liquid to flow through the larger number of the pores 328. The structural features 340 may be formed on the transfer screen 324 and/or the transfer mold 322.

In examples in which the structural features 340 are provided between the transfer screen 324 and the transfer mold 322 to form the channels 342, the processor 202 may determine the locations of the pores 328 also based on the predicted flow of liquid in the channels 342.

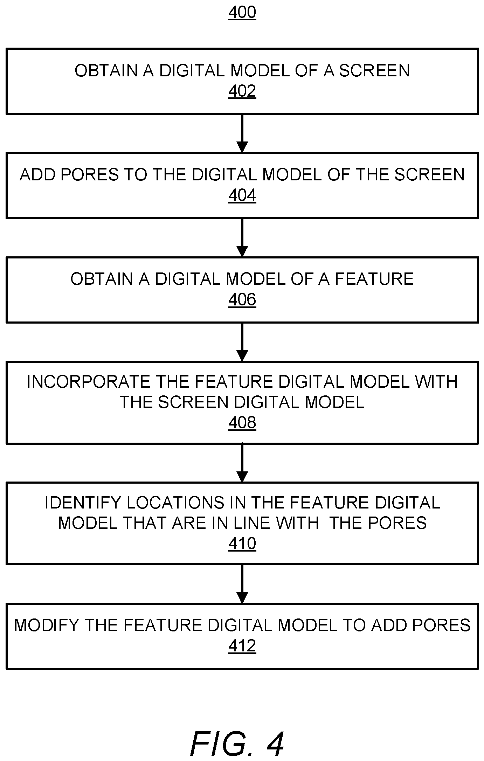

Turning now to FIG. 4, there is shown a flow diagram of an example method 400 for modifying a digital model 210 of a feature 212 to include a plurality of pores 214 at determined locations in the digital model 210 of the feature 212. It should be understood that the method 400 depicted in FIG. 4 may include additional operations and that some of the operations described therein may be removed and/or modified without departing from the scope of the method 400. The description of the method 400 is also made with reference to the features depicted in FIGS. 1-3D for purposes of illustration. Particularly, the processor 202 depicted in FIG. 2 may execute some or all of the operations included in the method 400 using the elements depicted in FIGS. 2-3D.

At block 402, the processor 202 may obtain a digital model 204 of a screen 206. At block 404, the processor 202 may add a plurality of pores 220 to the digital model 204 of the screen 206, in which the screen 206 may be implemented in a formation of a wet part 302 from a slurry 304 of a liquid and material elements. The processor 202 may add the pores 220 in any of the manners discussed herein.

At block 406, the processor 202 may obtain a digital model 210 of a feature 212 to be added to the screen 206, in which the feature 212 is to impart a detail 330 onto the wet part 302 during formation of the wet part 302. At block 408, the processor 202 may incorporate the digital model 210 of the feature 212 with the digital model 204 of the screen 206. In addition, at block 410, the processor 202 may identify locations in the digital model 210 of the feature 212 that are in line with pores 220 in the digital model 204 of the screen 206. At block 412, the processor 202 may modify the digital model 210 of the feature 212 to add pores 214 at the identified locations in the digital model 210 of the feature 212 to extend the pores 220 in the digital model 204 of the screen 206 through the digital model 210 of the feature 212.

Some or all of the operations set forth in the method 400 may be contained as utilities, programs, or subprograms, in any desired computer accessible medium. In addition, the method 400 may be embodied by computer programs, which may exist in a variety of forms. For example, the method 400 may exist as computer-readable instructions, including source code, object code, executable code or other formats. Any of the above may be embodied on a non-transitory computer readable storage medium.

Examples of non-transitory computer readable storage media include computer system RAM, ROM, EPROM, EEPROM, and magnetic or optical disks or tapes. It is therefore to be understood that any electronic device capable of executing the above-described functions may perform those functions enumerated above.

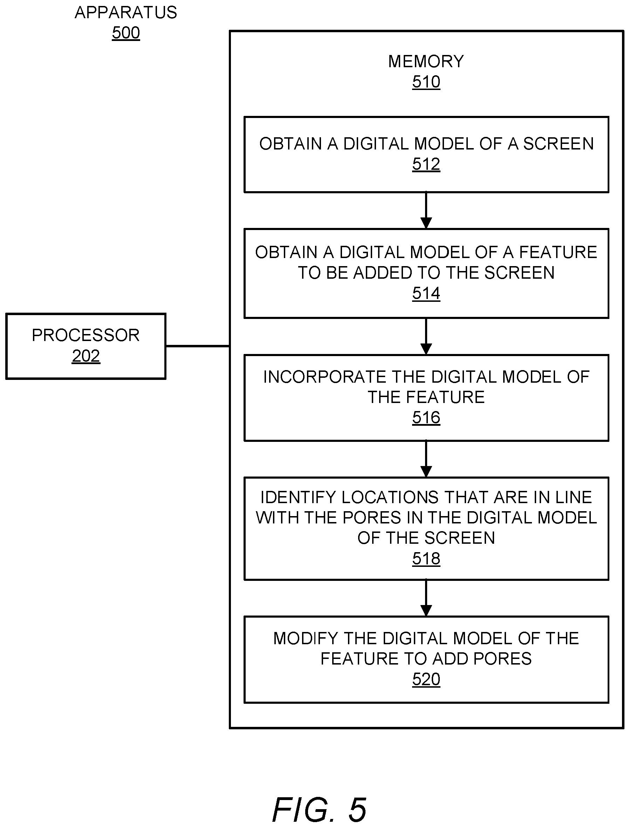

Reference is now made to FIG. 5, which shows a block diagram of an example apparatus 500 that may modify a digital model 210 of a feature 212 to include a plurality of pores 214 at determined locations in the digital model 210 of the feature 212. It should be understood that the example apparatus 500 depicted in FIG. 5 may include additional features and that some of the features described herein may be removed and/or modified without departing from the scopes of the apparatus 500. The description of the apparatus 500 is made with reference to FIGS. 1-3D for purposes of illustration.

The apparatus 500 may be a computing system such as a laptop computer, a tablet computer, a desktop computer, a smartphone, or the like. As shown, the apparatus 500 may include the processor 202. The apparatus 500 may also include a memory 510 that may have stored thereon machine-readable instructions (which may equivalently be termed computer-readable instructions) that the processor 202 may execute. The memory 510 may be an electronic, magnetic, optical, or other physical storage device that contains or stores executable instructions. The memory 510 may be, for example, Random-Access memory (RAM), an Electrically Erasable Programmable Read-Only Memory (EEPROM), a storage device, an optical disc, and the like. The memory 510, which may also be referred to as a computer-readable storage medium, may be a non-transitory machine-readable storage medium, where the term "non-transitory" does not encompass transitory propagating signals.

As shown in FIG. 5, the memory 510 may have stored thereon machine-readable instructions 512-520 that the processor 202 may execute. Although the instructions 512-520 are described herein as being stored on the memory 510 and may thus include a set of machine-readable instructions, the apparatus 500 may include hardware logic blocks that may perform functions similar to the instructions 512-520. For instance, the processor 202 may include hardware components that may execute the instructions 512-520. In other examples, the apparatus 500 may include a combination of instructions and hardware logic blocks to implement or execute functions corresponding to the instructions 512-520. In any of these examples, the processor 202 may implement the hardware logic blocks and/or execute the instructions 512-520. As discussed herein, the apparatus 500 may also include additional instructions and/or hardware logic blocks such that the processor 202 may execute operations in addition to or in place of those discussed above with respect to FIG. 5.

The processor 202 may execute the instructions 512 to obtain a digital model 204 of a screen 206, the digital model 204 including either a plurality of pores 220 or the digital model 204 may be processed to algorithmically add a plurality of pores 220 to the digital model 204 of the screen 206. The screen 206 may be one of a forming screen 308 to be removably mounted on a forming mold 306 or a transfer screen 324 to be removably mounted on a transfer mold 322.

The processor 202 may execute the instructions 514 to obtain a digital model 210 of a feature 212 to be added to the screen 206, in which the feature 212 is to impart a detail 330 onto a wet part 302 during formation of the wet part 302 from a slurry 304 of a liquid and material elements. The processor 202 may execute the instructions 516 to incorporate the digital model 210 of the feature 212 with the digital model 204 of the screen 206. As discussed herein, the processor 202 may add the digital model 210 of the feature 212 onto a surface of the digital model 204 of the screen 206 to cause the digital model 210 of the feature 212 to extend above the surface of the digital model 204 of the screen 206, in which the feature 212 is to be added to the screen 206 when the screen 206 and the feature 212 are fabricated. Or, the processor 202 may add the digital model 210 of the feature 212 below a surface of the digital model 204 of the screen 206 to cause the digital model 210 of the feature 212 to extend below the surface of the digital model 204 of the screen 206, in which the feature 212 is to be removed from the screen 206 when the screen 206 is fabricated.

The processor 202 may execute the instructions 518 to identify locations in the digital model 210 of the feature 212 that are in line with pores 220 in the digital model 210 of the screen 206. In addition, the processor 202 may modify the digital model 210 of the feature 212 to add pores 214 at the identified locations in the digital model 210 of the feature 212 to extend the pores 214 in the digital model 204 of the screen 206 through the digital model 210 of the feature 212.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example of the disclosure along with some of its variations. The terms, descriptions and figures used herein are set forth by way of illustration and are not meant as limitations. Many variations are possible within the scope of the disclosure, which is defined by the following claims.

## Claims

1. A non-transitory computer-readable medium (100) on which is stored machine-readable instructions that when executed by a processor, cause the processor to:
obtain (102) a digital model of a screen (206) to be fabricated by a three-dimensional (3D) fabrication system (208), the digital model of the screen including either a plurality of pores (214) or the digital model of the screen to be processed to algorithmically add a plurality of pores (214) to the digital model, wherein the screen is to be implemented in a formation of a wet part from a slurry of a liquid and material elements;
obtain (104) a digital model of a feature (212) to be added to a portion of the screen, wherein the feature is to impart a detail onto the wet part during formation of the wet part;
incorporate (106) the digital model of the feature with the digital model of the screen;
identify (108) locations in the digital model of the feature that are in line with pores in the digital model of the screen; and
modify (110) the digital model of the feature to add pores at the identified locations in the digital model of the feature to extend the pores in the digital model of the screen through the digital model of the feature.

2. The non-transitory computer-readable medium of claim 1, wherein the instructions are further to cause the processor to:
process the digital model of the screen to algorithmically add the plurality of pores to the digital model of the screen.

3. The non-transitory computer-readable medium of claim 1, wherein to incorporate the digital model of the feature with the digital model of the screen, the instructions are further to cause the processor to:
add the digital model of the feature onto a surface of the digital model of the screen to cause the digital model of the feature to extend above the surface of the digital model of the screen, wherein the feature is to be added to the screen when the screen and the feature are fabricated.

4. The non-transitory computer-readable medium of claim 1, wherein to incorporate the digital model of the feature with the digital model of the screen, the instructions are further to cause the processor to:
add the digital model of the feature below a surface of the digital model of the screen to cause the digital model of the feature to extend below the surface of the digital model of the screen, wherein the feature is to be removed from the screen when the screen is fabricated.

5. The non-transitory computer-readable medium of claim 1, wherein the feature corresponds to an embossed graphical element, an embossed logo, embossed text, a predefined embossed texture, a predefined embossed pattern, a bas relief, or a combination thereof.

6. The non-transitory computer-readable medium of claim 1, wherein the screen comprises a forming screen to be removably mounted on a forming mold or a transfer screen to be removably mounted on a transfer mold.

7. The non-transitory computer-readable medium of claim 1, wherein the digital model of the screen includes a substantially horizontally extending surface and a substantially vertically extending surface and wherein the instructions are further to cause the processor to:
incorporate the digital model of the feature to the substantially horizontally extending surface, the substantially vertically extending surface, or both the substantially horizontally extending surface and the substantially vertically extending surface.

8. The non-transitory computer-readable medium of claim 1, wherein the instructions are further to cause the processor to:
send the modified digital model to the 3D fabrication system, wherein the 3D fabrication system is to fabricate the screen according to the model of the screen and the modified digital model of the feature.

9. A method (400) comprising:
obtaining (402), by a processor, a digital model of a screen;
adding (404), by the processor, a plurality of pores to the digital model of the screen, wherein the screen is to be implemented in a formation of a wet part from a slurry of a liquid and material elements;
obtaining (406), by the processor, a digital model of a feature to be added to the screen, wherein the feature is to impart a detail onto the wet part during formation of the wet part;
incorporating (408), by the processor, the digital model of the feature with the digital model of the screen; and
identifying (410), by the processor, locations in the digital model of the feature that are in line with pores in the digital model of the screen; and
modifying (412), by the processor, the digital model of the feature to add pores at the identified locations in the digital model of the feature to extend the pores in the digital model of the screen through the digital model of the feature.

10. The method of claim 9, wherein incorporating the digital model of the feature with the digital model of the screen further comprises:
adding the digital model of the feature onto a surface of the digital model of the screen to cause the digital model of the feature to extend above the surface of the digital model of the screen, wherein the feature is to be added to the screen when the screen and the feature are fabricated.

11. The method of claim 9, wherein incorporating the digital model of the feature with the digital model of the screen further comprises:
adding the digital model of the feature below a surface of the digital model of the screen to cause the digital model of the feature to extend below the surface of the digital model of the screen, wherein the feature is to be removed from the screen when the screen is fabricated.

12. The method of claim 9, wherein the digital model of the screen includes a substantially horizontally extending surface and a substantially vertically extending surface, the method further comprising:
incorporating the digital model of the feature to the substantially horizontally extending surface, the substantially vertically extending surface, or both the substantially horizontally extending surface and the substantially vertically extending surface.

13. An apparatus (500) comprising:
a processor (202); and
a memory (510) on which is stored instructions that when executed by the processor, cause the processor to:
obtain (512) a digital model of a screen, the digital model including either a plurality of pores or the digital model to be processed to algorithmically add a plurality of pores to the digital model of the screen, wherein the screen is one of a forming screen to be removably mounted on a forming mold or a transfer screen to be removably mounted on a transfer mold;
obtain (514) a digital model of a feature to be added to the screen, wherein the feature is to impart a detail onto a wet part during formation of the wet part from a slurry of a liquid and material elements;
incorporate (516) the digital model of the feature with the digital model of the screen;
identify (518) locations in the digital model of the feature that are in line with pores in the digital model of the screen; and
modify (520) the digital model of the feature to add pores at the identified locations in the digital model of the feature to extend the pores in the digital model of the screen through the digital model of the feature.

14. The apparatus of claim 13, wherein the feature corresponds to a predefined embossed texture, an embossed graphical element, an embossed logo, embossed text, a predefined embossed texture, a predefined embossed pattern, a bas relief, or a combination thereof.

15. The apparatus of claim 13, wherein to incorporate the digital model of the feature with the digital model of the screen, the instructions are further to cause the processor to:
add the digital model of the feature onto a surface of the digital model of the screen to cause the digital model of the feature to extend above the surface of the digital model of the screen, wherein the feature is to be added to the screen when the screen and the feature are fabricated; or
add the digital model of the feature below a surface of the digital model of the screen to cause the digital model of the feature to extend below the surface of the digital model of the screen, wherein the feature is to be removed from the screen when the screen is fabricated.

## Patentansprüche

1. Nichtflüchtiges computerlesbares Medium (100), auf dem maschinenlesbare Anweisungen gespeichert sind, die, wenn sie durch einen Prozessor ausgeführt werden, den Prozessor veranlassen zum:
Erhalten (102) eines digitalen Modells eines Siebs (206), das durch ein dreidimensionales (3D) Fertigungssystem (208) zu fertigen ist, wobei das digitale Modell des Siebs entweder eine Vielzahl von Poren (214) einschließt oder das digitale Modell des Siebs zu verarbeiten ist, um eine Vielzahl von Poren (214) zu dem digitalen Modell algorithmisch hinzuzufügen, wobei das Sieb bei einer Formung eines nassen Teils aus einer Aufschlämmung einer Flüssigkeit und von Materialelementen zu implementieren ist;
Erhalten (104) eines digitalen Modells eines Merkmals (212), das zu einem Abschnitt des Siebs hinzuzufügen ist, wobei das Merkmal dazu dient, dem nassen Teil während einer Formung des nassen Teils ein Detail zu verleihen;
Integrieren (106) des digitalen Modells des Merkmals in das digitale Modell des Siebs;
Identifizieren (108) von Stellen in dem digitalen Modell des Merkmals, die mit Poren in dem digitalen Modell des Siebs übereinstimmen; und
Modifizieren (110) des digitalen Modells des Merkmals, um Poren an den identifizierten Stellen in dem digitalen Modell des Merkmals dazu hinzuzufügen, dass sich die Poren in dem digitalen Modell des Siebs durch das digitale Modell des Merkmals hindurch erstrecken.

2. Nichtflüchtiges computerlesbares Medium nach Anspruch 1, wobei die Anweisungen ferner dazu dienen, den Prozessor zu veranlassen zum:
Verarbeiten des digitalen Modells des Siebs, um die Vielzahl von Poren zu dem digitalen Modell des Siebs algorithmisch hinzuzufügen.

3. Nichtflüchtiges computerlesbares Medium nach Anspruch 1, wobei, um das digitale Modell des Merkmals in das digitale Modell des Siebs zu integrieren, die Anweisungen ferner dazu dienen, den Prozessor zu veranlassen zum:
Hinzufügen des digitalen Modells des Merkmals auf eine Oberfläche des digitalen Modells des Siebs, um das digitale Modell des Merkmals zu veranlassen, sich oberhalb der Oberfläche des digitalen Modells des Siebs zu erstrecken, wobei das Merkmal zu dem Sieb hinzuzufügen ist, wenn der Sieb und das Merkmal gefertigt werden.

4. Nichtflüchtiges computerlesbares Medium nach Anspruch 1, wobei, um das digitale Modell des Merkmals in das digitale Modell des Siebs zu integrieren, die Anweisungen ferner dazu dienen, den Prozessor zu veranlassen zum:
Hinzufügen des digitalen Modells des Merkmals unterhalb einer Oberfläche des digitalen Modells des Siebs, um das digitale Modell des Merkmals zu veranlassen, sich unterhalb der Oberfläche des digitalen Modells des Siebs zu erstrecken, wobei das Merkmal von dem Sieb zu entfernen ist, wenn der Sieb gefertigt wird.

5. Nichtflüchtiges computerlesbares Medium nach Anspruch 1, wobei das Merkmal einem geprägten grafischen Element, einem geprägten Logo, geprägtem Text, einer vordefinierten geprägten Struktur, einem vordefinierten geprägten Muster, einem Flachrelief oder einer Kombination davon entspricht.

6. Nichtflüchtiges computerlesbares Medium nach Anspruch 1, wobei das Sieb ein Formiersieb, das an einem Formwerkzeug abnehmbar anzubringen ist, oder ein Transfersieb umfasst, das an einem Transferwerkzeug abnehmbar anzubringen ist.

7. Nichtflüchtiges computerlesbares Medium nach Anspruch 1, wobei das digitale Modell des Siebs eine sich im Wesentlichen horizontal erstreckende Oberfläche und eine sich im Wesentlichen vertikal erstreckende Oberfläche einschließt und wobei die Anweisungen ferner dazu dienen, den Prozessor zu veranlassen zum:
Integrieren des digitalen Modells des Merkmals in die sich im Wesentlichen horizontal erstreckende Oberfläche, die sich im Wesentlichen vertikal erstreckende Oberfläche oder sowohl die sich im Wesentlichen horizontal erstreckende Oberfläche als auch die sich im Wesentlichen vertikal erstreckende Oberfläche.

8. Nichtflüchtiges computerlesbares Medium nach Anspruch 1, wobei die Anweisungen ferner dazu dienen, den Prozessor zu veranlassen zum:
Senden des modifizierten digitalen Modells an das 3D-Fertigungssystem, wobei das 3D-Fertigungssystem dazu dient, den Sieb gemäß dem Modell des Siebs und dem modifizierten digitalen Modell des Merkmals zu fertigen.

9. Verfahren (400), das umfasst:
Erhalten (402), durch einen Prozessor, eines digitalen Modells eines Siebs;
Hinzufügen (404), durch den Prozessor, einer Vielzahl von Poren zu dem digitalen Modell des Siebs, wobei das Sieb bei einer Formung eines nassen Teils aus einer Aufschlämmung einer Flüssigkeit und von Materialelementen zu implementieren ist;
Erhalten (406), durch den Prozessor, eines digitalen Modells eines Merkmals, das dem Sieb hinzuzufügen ist, wobei das Merkmal dazu dient, dem nassen Teil während einer Formung des nassen Teils ein Detail zu verleihen;
Integrieren (408), durch den Prozessor, des digitalen Modells des Merkmals in das digitale Modell des Siebs; und Identifizieren (410), durch den Prozessor, von Stellen in dem digitalen Modell des Merkmals, die mit Poren in dem digitalen Modell des Siebs übereinstimmen; und
Modifizieren (412), durch den Prozessor, des digitalen Modells des Merkmals, um Poren an den identifizierten Stellen in dem digitalen Modell des Merkmals dazu hinzuzufügen, dass sich die Poren in dem digitalen Modell des Siebs durch das digitale Modell des Merkmals hindurch erstrecken.

10. Verfahren nach Anspruch 9, wobei ein Integrieren des digitalen Modells des Merkmals in das digitale Modell des Siebs ferner umfasst:
Hinzufügen des digitalen Modells des Merkmals auf eine Oberfläche des digitalen Modells des Siebs, um das digitale Modell des Merkmals zu veranlassen, sich oberhalb der Oberfläche des digitalen Modells des Siebs zu erstrecken, wobei das Merkmal zu dem Sieb hinzuzufügen ist, wenn der Sieb und das Merkmal gefertigt werden.

11. Verfahren nach Anspruch 9, wobei ein Integrieren des digitalen Modells des Merkmals in das digitale Modell des Siebs ferner umfasst:
Hinzufügen des digitalen Modells des Merkmals unterhalb einer Oberfläche des digitalen Modells des Siebs, um das digitale Modell des Merkmals zu veranlassen, sich unterhalb der Oberfläche des digitalen Modells des Siebs zu erstrecken, wobei das Merkmal von dem Sieb zu entfernen ist, wenn der Sieb gefertigt wird.

12. Verfahren nach Anspruch 9, wobei das digitale Modell des Siebs eine sich im Wesentlichen horizontal erstreckende Oberfläche und eine sich im Wesentlichen vertikal erstreckende Oberfläche einschließt, wobei das Verfahren ferner umfasst:
Integrieren des digitalen Modells des Merkmals in die sich im Wesentlichen horizontal erstreckende Oberfläche, die sich im Wesentlichen vertikal erstreckende Oberfläche oder sowohl die sich im Wesentlichen horizontal erstreckende Oberfläche als auch die sich im Wesentlichen vertikal erstreckende Oberfläche.

13. Einrichtung (500), die umfasst: einen Prozessor (202); und
einen Speicher (510), auf dem maschinenlesbare Anweisungen gespeichert sind, die, wenn sie durch den Prozessor ausgeführt werden, den Prozessor veranlassen zum:
Erhalten (512) eines digitalen Modells eines Siebs, wobei das digitale Modell entweder eine Vielzahl von Poren einschließt oder das digitale Modell zu verarbeiten ist, um eine Vielzahl von Poren zu dem digitalen Modell des Siebs algorithmisch hinzuzufügen, wobei es sich bei dem Sieb um eines von einem Formiersieb, das an einem Formwerkzeug abnehmbar anzubringen ist, oder einem Transfersieb handelt, das an einer Transferwerkzeug abnehmbar anzubringen ist;
Erhalten (514) eines digitalen Modells eines Merkmals, das zu dem Sieb hinzuzufügen ist, wobei das Merkmal dazu dient, einem nassen Teil während einer Formung des nassen Teils aus einer Aufschlämmung einer Flüssigkeit und von Materialelementen ein Detail zu verleihen;
Integrieren (516) des digitalen Modells des Merkmals in das digitale Modell des Siebs;
Identifizieren (518) von Stellen in dem digitalen Modell des Merkmals, die mit Poren in dem digitalen Modell des Siebs übereinstimmen; und
Modifizieren (520) des digitalen Modells des Merkmals, um Poren an den identifizierten Stellen in dem digitalen Modell des Merkmals dazu hinzuzufügen, dass sich die Poren in dem digitalen Modell des Siebs durch das digitale Modell des Merkmals hindurch erstrecken.

14. Einrichtung nach Anspruch 13, wobei das Merkmal einer vordefinierten geprägten Struktur, einem geprägten grafischen Element, einem geprägten Logo, geprägtem Text, einer vordefinierten geprägten Struktur, einem vordefinierten geprägten Muster, einem Flachrelief oder einer Kombination davon entspricht.

15. Einrichtung nach Anspruch 13, wobei, um das digitale Modell des Merkmals in das digitale Modell des Siebs zu integrieren, die Anweisungen ferner dazu dienen, den Prozessor zu veranlassen zum:
Hinzufügen des digitalen Modells des Merkmals auf eine Oberfläche des digitalen Modells des Siebs, um das digitale Modell des Merkmals zu veranlassen, sich oberhalb der Oberfläche des digitalen Modells des Siebs zu erstrecken, wobei das Merkmal zu dem Sieb hinzuzufügen ist, wenn der Sieb und das Merkmal gefertigt werden, oder
Hinzufügen des digitalen Modells des Merkmals unterhalb einer Oberfläche des digitalen Modells des Siebs, um das digitale Modell des Merkmals zu veranlassen, sich unterhalb der Oberfläche des digitalen Modells des Siebs zu erstrecken, wobei das Merkmal von dem Sieb zu entfernen ist, wenn der Sieb gefertigt wird.

## Revendications

1. Support non transitoire lisible par ordinateur (100) sur lequel sont stockées des instructions lisibles par machine qui lorsqu'elles sont exécutées par un processeur, amènent le processeur à :
obtenir (102) un modèle numérique d'un écran (206) à fabriquer par un système de fabrication tridimensionnel (3D) (208), le modèle numérique de l'écran comportant une pluralité de pores (214) ou le modèle numérique de l'écran à traiter pour ajouter de manière algorithmique une pluralité de pores (214) au modèle numérique, dans lequel l'écran doit être mis en œuvre dans une formation d'une pièce humide à partir d'une suspension composée d'un liquide et d'éléments matériels ;
obtenir (104) un modèle numérique d'une caractéristique (212) à ajouter à une partie de l'écran, dans lequel la caractéristique doit conférer un détail sur la pièce humide pendant une formation de la pièce humide ;
incorporer (106) le modèle numérique de la caractéristique au modèle numérique de l'écran ;
identifier (108) des emplacements dans le modèle numérique de la caractéristique qui correspondent à des pores du modèle numérique de l'écran ; et
modifier (110) le modèle numérique de la caractéristique pour ajouter des pores au niveau d'emplacements identifiés dans le modèle numérique de la caractéristique afin d'étendre les pores dans le modèle numérique de l'écran par le biais du modèle numérique de la caractéristique.

2. Support non transitoire lisible par ordinateur selon la revendication 1, dans lequel les instructions sont en outre destinées à amener le processeur à :
traiter le modèle numérique de l'écran pour ajouter de manière algorithmique la pluralité de pores au modèle numérique de l'écran.

3. Support non transitoire lisible par ordinateur selon la revendication 1, dans lequel, pour incorporer le modèle numérique de la caractéristique au modèle numérique de l'écran, les instructions sont en outre destinées à amener le processeur à :
ajouter le modèle numérique de la caractéristique sur une surface du modèle numérique de l'écran pour amener le modèle numérique de la caractéristique à s'étendre au-dessus de la surface du modèle numérique de l'écran, dans lequel la caractéristique doit être ajoutée à l'écran lorsque l'écran et la caractéristique sont fabriqués.

4. Support non transitoire lisible par ordinateur selon la revendication 1, dans lequel, pour incorporer le modèle numérique de la caractéristique au modèle numérique de l'écran, les instructions sont en outre destinées à amener le processeur à :
ajouter le modèle numérique de la caractéristique sous une surface du modèle numérique de l'écran pour amener le modèle numérique de la caractéristique à s'étendre sous la surface du modèle numérique de l'écran, dans lequel la caractéristique doit être retirée de l'écran lorsque l'écran est fabriqué.

5. Support non transitoire lisible par ordinateur selon la revendication 1, dans lequel la caractéristique correspond à un élément graphique bosselé, un logo bosselé, un texte bosselé, une texture bosselée prédéfinie, un motif bosselé prédéfini, un bas-relief, ou une combinaison de ceux-ci.

6. Support non transitoire lisible par ordinateur selon la revendication 1, dans lequel l'écran comprend un écran de formage à monter de manière amovible sur un moule de formage ou un écran de transfert à monter de manière amovible sur un moule de transfert.

7. Support non transitoire lisible par ordinateur selon la revendication 1, dans lequel le modèle numérique de l'écran comporte une surface s'étendant de manière sensiblement horizontale et une surface s'étendant de manière sensiblement verticale, et dans lequel les instructions sont en outre destinées à amener le processeur à :
incorporer le modèle numérique de la caractéristique à la surface s'étendant de manière sensiblement horizontale, à la surface s'étendant de manière sensiblement verticale, ou à la fois à la surface s'étendant de manière sensiblement horizontale et à la surface s'étendant de manière sensiblement verticale.

8. Support non transitoire lisible par ordinateur selon la revendication 1, dans lequel les instructions sont en outre destinées à amener le processeur à :
envoyer le modèle numérique modifié au système de fabrication 3D, dans lequel le système de fabrication 3D doit fabriquer l'écran selon le modèle de l'écran et le modèle numérique modifié de la caractéristique.

9. Procédé (400) comprenant :
l'obtention (402), par un processeur, d'un modèle numérique d'un écran ;
l'ajout (404), par le processeur, d'une pluralité de pores au modèle numérique de l'écran, dans lequel l'écran doit être mis en œuvre dans une formation d'une pièce humide à partir d'une suspension composée d'un liquide et d'éléments matériels ;
l'obtention (406), par le processeur, d'un modèle numérique d'une caractéristique à ajouter à l'écran, dans lequel la caractéristique doit conférer un détail à la pièce humide pendant une formation de la pièce humide ;
l'incorporation (408), par le processeur, du modèle numérique de la caractéristique avec le modèle numérique de l'écran ; et l'identification (410), par le processeur, d'emplacements dans le modèle numérique de la caractéristique qui correspondent à des pores dans le modèle numérique de l'écran ; et
la modification (412), par le processeur, du modèle numérique de la caractéristique pour ajouter des pores au niveau d'emplacements identifiés dans le modèle numérique de la caractéristique afin d'étendre les pores dans le modèle numérique de l'écran par le biais du modèle numérique de la caractéristique.

10. Procédé selon la revendication 9, dans lequel l'incorporation du modèle numérique de la caractéristique au modèle numérique de l'écran comprend en outre :
l'ajout du modèle numérique de la caractéristique sur une surface du modèle numérique de l'écran pour amener le modèle numérique de la caractéristique à s'étendre au-dessus de la surface du modèle numérique de l'écran, dans lequel la caractéristique doit être ajoutée à l'écran lorsque l'écran et la caractéristique sont fabriqués.

11. Procédé selon la revendication 9, dans lequel l'incorporation du modèle numérique de la caractéristique au modèle numérique de l'écran comprend en outre :
l'ajout du modèle numérique de la caractéristique sous une surface du modèle numérique de l'écran pour amener le modèle numérique de la caractéristique à s'étendre sous la surface du modèle numérique de l'écran, dans lequel la caractéristique doit être retirée de l'écran lorsque l'écran est fabriqué.

12. Procédé selon la revendication 9, dans lequel le modèle numérique de l'écran comporte une surface s'étendant de manière sensiblement horizontale et une surface s'étendant de manière sensiblement verticale, le procédé comprenant en outre :
l'incorporation du modèle numérique de la caractéristique à la surface s'étendant de manière sensiblement horizontale, à la surface s'étendant de manière sensiblement verticale, ou à la fois à la surface s'étendant de manière sensiblement horizontale et à la surface s'étendant de manière sensiblement verticale.

13. Appareil (500) comprenant : un processeur (202) ; et
une mémoire (510) sur laquelle sont stockées des instructions qui, lorsqu'elles sont exécutées par le processeur, amènent le processeur à :
obtenir (512) un modèle numérique d'un écran, le modèle numérique comportant soit une pluralité de pores, soit le modèle numérique à traiter pour ajouter de manière algorithmique une pluralité de pores au modèle numérique de l'écran, dans lequel l'écran est l'un parmi un écran de formage à monter de manière amovible sur un moule de formage ou un écran de transfert à monter de manière amovible sur un moule de transfert ;
obtenir (514) un modèle numérique d'une caractéristique à ajouter à l'écran, dans lequel la caractéristique doit conférer un détail sur une pièce humide pendant une formation de la pièce humide à partir d'une suspension composée d'un liquide et d'éléments matériels ;
incorporer (516) le modèle numérique de la caractéristique au modèle numérique de l'écran ;
identifier (518) des emplacements du modèle numérique de la caractéristique qui correspondent aux pores du modèle numérique de l'écran ; et
modifier (520) le modèle numérique de la caractéristique pour ajouter des pores au niveau d'emplacements identifiés dans le modèle numérique de la caractéristique afin d'étendre les pores dans le modèle numérique de l'écran par le biais du modèle numérique de la caractéristique.

14. Appareil selon la revendication 13, dans lequel la caractéristique correspond à une texture bosselée prédéfinie, un élément graphique bosselé, un logo bosselé, un texte bosselé, une texture bosselée prédéfinie, un motif bosselé prédéfini, un bas-relief, ou une combinaison de ceux-ci.

15. Appareil selon la revendication 13, dans lequel, pour incorporer le modèle numérique de la caractéristique au modèle numérique de l'écran, les instructions sont en outre destinées à amener le processeur à :
ajouter le modèle numérique de la caractéristique sur une surface du modèle numérique de l'écran pour amener le modèle numérique de la caractéristique à s'étendre au-dessus de la surface du modèle numérique de l'écran, dans lequel la caractéristique doit être ajoutée à l'écran lorsque l'écran et la caractéristique sont fabriqués ; ou
ajouter le modèle numérique de la caractéristique sous une surface du modèle numérique de l'écran pour amener le modèle numérique de la caractéristique à s'étendre sous la surface du modèle numérique de l'écran, dans lequel la caractéristique doit être retirée de l'écran lorsque l'écran est fabriqué.
